# EUROPÄISCHE PATENTSCHRIFT

(11) **EP 3 332 528 B1**
(45) Veröffentlichungstag und Bekanntmachung des Hinweises auf die Patenterteilung: **19.05.2021**
(21) Anmeldenummer: 16751559.2
(22) Anmeldetag: 08.08.2016
(51) Int. Cl.: H04L 29/08, H04L 29/06, H04L 9/32

(54) **ÜBERWACHEN EINER INTEGRITÄT EINES TESTDATENSATZES**
MONITORING AN INTEGRITY OF A TEST DATASET
CONTRÔLE DE L'INTÉGRITÉ D'UN ENSEMBLE DE DONNÉES D'ESSAI

(30) Priorität: 24.09.2015 DE 102015218373
(43) Veröffentlichungstag der Anmeldung: 13.06.2018
(73) Patentinhaber: Siemens Aktiengesellschaft, 80333 München (DE)
(72) Erfinder: FALK, Rainer, 85586 Poing (DE)
(86) Internationale Anmeldenummer: PCT/EP2016/068832
(87) Internationale Veröffentlichungsnummer: WO 2017/050479

(56) Entgegenhaltungen:
- WO-A1-98/47264
- DE-A1-102010 033 229
- Rainer Falk ET AL: "Security Service for the Rollout of Security Credentials in Ubiquitous Industrial Automation Environments", Service Computation 2010, 21. November 2010 (2010-11-21), Seiten 104-110, XP055073477, Gefunden im Internet: URL:http://www.thinkmind.org/index.php?vie w=article&articleid=service_computation_20 10_5_20_20033 [gefunden am 2013-07-30]

## Beschreibung

Die Erfindung betrifft ein Verfahren sowie eine Krypto-Anordnung und ein Computerprogrammprodukt zum Überwachen einer Integrität eines Testdatensatzes, wobei eine Stichprobe eines Testdatensatzes im Hinblick auf Integrität überprüft wird.

In Automatisierungssystemen oder im Internet of Things sind Anwendungen oder Geräte vor IT-Angriffen zu schützen. In diesem Umfeld bestehen oftmals hohe Anforderungen an die Latenz oder Verzögerung der Datenkommunikation. Es sind oftmals einfache, mit wenig Rechenkapazität ausgestattete Geräte im Internet of Things vorgesehen. Zum Erreichen eines ausreichenden Schutzniveaus ist es dabei in vielen Anwendungsszenarien weder praktikabel noch wirtschaftlich, jedes einzelne Kleinsystem oder jedes einzelne Datenpaket oder jede einzelne Kommunikationsverbindung hinreichend robust gegen Angriffe zu schützen. Zusätzlich vorgesehene kryptographische Schutzmaßnahmen können insbesondere bei Altgeräten oder Fremdgeräten häufig nicht auf einfache Weise nachgerüstet werden. Selbst wenn integrierte Security-Lösungen verwendet werden, ist das Schutzniveau oftmals nicht ausreichend, da im Umfeld von Automatisierungssystemen Steuerungssoftware manipuliert sein kann oder kryptographische Schlüssel zum Schutz einer Kommunikation kompromittiert sein können.

Aus der Offenlegungsschrift DE 10 2010 033229 A1 ist es bekannt, zu Steuerungsdaten eine Integritätsprüfinformation abzuleiten, welche kryptographisch geschützt übertragen und geprüft wird. Die Prüfung erfolgt separat zu den zu übertragenden Steuerungsdaten.

Es ist ferner aus der Patentschrift DE 10 2009 039097 B3 bekannt, eine kryptographisch geschützte Datenstruktur über einen Wertebereich zusätzlich zur Übertragung der ungesicherten Messwerte bereitzustellen. Die kryptographisch geschützte Datenstruktur über den Wertebereich kann zur Überprüfung von für einen bestimmten Zeitraum vorhersagbaren Messwerten genutzt werden.

Die DE 10 2010 033 229 A1 offenbart darüber hinaus ein Verfahren zum Erkennen einer Manipulation bei der Übertragung von Steuerdaten von einer ersten Steuereinheit zu einer zweiten Steuereinheit über ein Netzwerk.

Außerdem ist aus der WO 98/47264 A1 ein Verfahren zur Bildung einer ersten kommutativen Prüfsumme für digitale Daten bekannt, die in mehrere Datensegmente gruppiert sind.

Vor diesem Hintergrund ist es Aufgabe der vorliegenden Erfindung, eine funktionelle Integrität für einen über eine Kommunikationsverbindung in Echtzeit zu übertragenden Datensatz auf einfache und rechenarme Weise sicherzustellen.

Diese Aufgabe wird durch die Gegenstände der unabhängigen Ansprüche gelöst. Vorteilhafte Ausgestaltungen und Weiterbildungen sind in den abhängigen Ansprüchen angegeben.

Die Erfindung betrifft ein Verfahren zum Überwachen einer Integrität eines verteilten Systems, aufweisend die folgenden Schritte:
- stichprobenartiges Bestimmen eines Testdatensatzes abhängig von einem über eine Kommunikationsverbindung des verteilten Systems zu übertragenden Datensatz;
- kryptographisch geschütztes Bereitstellen des Testdatensatzes an eine Prüfeinheit, wobei eine Übertragung des Datensatzes über die Kommunikationsverbindung durch das Bestimmen und Bereitstellen unbeeinflusst erfolgt;
- Prüfen des kryptographisch geschützten Testdatensatzes durch die Prüfeinheit in Hinblick auf Integrität anhand von kryptographischen Berechnungen und von Plausibilitätsinformationen dadurch gekennzeichnet, dass die Plausibilitätsinformationen einen Verlauf oder ein Muster des zu übertragenden Datensatz betreffen.

Durch das Prüfen ist ein Ergebnis lieferbar, welches eine Integrität des Testdatensatzes bestätigt oder eine Alarmmeldung bereit stellt. In Abhängigkeit von dem Ergebnis kann beispielsweise beim Ausführen einer Steuerungssoftware eine vorgegebene Reaktion erfolgen, wie beispielsweise das Unterbrechen der Datenverbindung oder ein Unterlagen der Verarbeitung empfangener Sensorwerte oder Steuerungsbefehle. Überdies kann eine Alarmmeldung weitere Schritte einleiten, beispielsweise um eine Schwachstelle zu identifizieren. Beispielsweise leitet eine Steuerungseinheit, welche den Datensatz verarbeitet, einen Logeintrag mit Datum der empfangenen Daten, für welche die Integrität nicht bestätigt werden konnte, oder Absender oder Inhalt.

Dabei attestiert das Ergebnis die Integrität mittels einer kryptographisch geschützten Information. Da das Prüfen des Testdatensatzes auf Integrität inklusive des stichprobenartigen Auswählens und kryptographisch geschützten Bereitstellens ohne Rückwirkung auf die Datenkommunikation stattfindet, ist entsprechend auch der Vorgang der kryptographischen Überprüfung abzusichern. Insbesondere geschieht dies über eine Attestierung, zum Beispiel mit Hilfe von Signaturverfahren oder Zertifikaten. Somit kann auf vorteilhafte Weise nicht vorgetäuscht werden, dass eine Integrität durch das Prüfverfahren bestätigt wird. Über die Bestätigungsinformation kann beispielsweise eine Authentisierung der Prüfeinheit erfolgen.

Durch die Erfindung wird die Integrität eines verteilten Systems, insbesondere eines verteilten Steuerungssystems mit Sensoren und Aktuatoren, überprüft, indem ein Testdatensatz als Stichprobe erfasst und überprüft wird. Die Stichprobe wird dabei unabhängig von dem übertragenen Datensatz erfasst und überprüft. Dadurch wird eine Verzögerung bei der Übertragung und Verarbeitung des übertragenen Datensatzes vermieden, sodass die Erfindung auch bei hohen Echtzeitanforderungen wie z.B. Antriebssteuerung, anwendbar ist. Bei einem kryptographischen Schutz des Datensatzes bzw. der Übertragung des Datensatzes käme es zu Verzögerungen durch das Erzeugen und Prüfen des kryptographischen Schutzes.

Weiterhin ist die Erfindung vorteilhaft bei Safety-kritischen Systemen einsetzbar, bei denen die Übertragung und Bearbeitung des Datensatzes nicht durch Security-Maßnahmen beeinflusst werden soll, d.h bei denen Rückwirkungsfreiheit sichergestellt sein soll. Andernfalls müssten Security-Maßnahmen bei einer Safety-Evaluierung mit untersucht und bezüglich ihren Safety-Eigenschaften zertifiziert werden.

Die Erfindung ist besonders vorteilhaft bei Steuerungssystemen anwendbar, bei denen nicht eine Informationsübertragung selbst kryptographisch geschützt werden muss, wie bei Datenübertragungssystemen, sondern bei denen die korrekte Funktionalität einer Steuerungsfunktionalität überwacht werden soll. Dadurch kann indirekt anhand der Prüfung der Stichproben auch eine Integritätsverletzung der Datenübertragung erkannt werden. Die Stichproben werden dazu nicht nur kryptographisch geprüft, sondern es wird auch die Plausibilität geprüft. Dabei kann ein Testdatensatz in sich auf Plausibilität geprüft werden, es kann die Plausibilität zwischen mehreren Testdatensätzen geprüft werden, es kann die Plausibilität zwischen Testdatensatz und übertragenem Datensatz geprüft werden, und es kann die Plausibilität mit anderen Plausibilitätsinformationen, z.B. Projektierungsdaten, Konfigurationsdaten, physikalischen Eigenschaften eines Prozesses oder von Komponenten, geprüft werden.

Das Erfassen der Stichprobe über das stichprobenartige Bestimmen sowie das Anwenden des kryptographischen Verfahrens zum kryptographisch geschützten Bereitstellen erfolgt dabei ohne Einfluss auf die Übertragung des Datensatzes über die Kommunikationsverbindung. Eine Datenübertragung wird dabei unbeeinflusst durch die Bildung des kryptographisch geschützten Datensatzes fortgeführt. Somit ist eine Rückwirkungsfreiheit des IT-Security-Schutzes auf die reguläre Operation, welche durch die Übertragung des Testdatensatzes ausgeführt wird, gewährleistet. Somit ist das Verfahren vorteilhaft auch bei Safety-kritischen Systemen oder bei Systemen mit hohen Echtzeitanforderungen anwendbar. Die Übertragung des kryptographisch geschützten Testdatensatzes kann über die gleiche Kommunikationsverbindung wie die zur Übertragung des Datensatzes erfolgen oder über eine separate, beispielsweise über Mobilfunk, Bluetooth, ZigBee oder NFC.

Beispielsweise wird ein Testdatensatz aus dem zu übertragenden Datensatz stichprobenartig ausgewählt. Alternativ wird der Testdatensatz separat, z.B. in Hardware, erfasst.

Das kryptographisch geschützte Bereitstellen erfolgt beispielsweise durch Hinzufügen einer kryptographischen Prüfsumme, beispielsweise unter Verwendung von schlüsselbasierten Hashfunktionen oder Nachrichten-Authentifizierungscodes, sogenannten Message Authentication Codes, oder durch Bilden einer digitalen Signatur. Es können ferner schlüssellose Prüfsummen vorgesehen sein. Der Schutz wird jeweils durch kryptographische Berechnungen auf Seiten einer Prüfeinheit erreicht. Insbesondere erfolgt dafür das Bilden einer schlüssellosen oder schlüsselbasierten Prüfsumme auf Basis des Testdatensatzes, der zusätzlich zu der darüber gebildeten Prüfsumme übermittelt wird. Ferner erfolgt im Falle von zum Schutz übermittelten Signaturen eine Signaturprüfung mit Hilfe von Schlüsselpaaren.

Insbesondere erfolgt die Prüfung des kryptographisch geschützten Testdatensatzes ebenfalls unabhängig von der Übertragung des Datensatzes. Falls das Prüfen des kryptographisch geschützten Testdatensatzes durch die Prüfeinheit eine Integrität des Testdatensatzes nicht zusichern kann, kann beispielsweise eine Datenübertragung zum schnellstmöglichen Zeitpunkt gestoppt werden. Insbesondere erfolgt eine Alarmmeldung sobald wie möglich. Dennoch wird die Datenübertragung zunächst durch das Verfahren rückwirkungsfrei fortgeführt. Somit sind für den Regelfall, in welchem eine Manipulation von Datensätzen nicht auftritt, ein hoher Datendurchsatz und eine geringe Verzögerung erzielbar.

Für die Fälle, in welchen eine Manipulation durch das Prüfen erkannt wird, erfolgt der Eingriff schnellstmöglich und korrigiert dadurch beispielsweise bereits übertragene Datensätze, beispielsweise einen bereits übertragenen Sensorwert. Beispielsweise wird bei einem manipulierten, bereits übertragenen Sensorwert eine Verarbeitung des Wertes oder eine Auswertung oder ein Logeintrag rückgängig gemacht werden oder angepasst.

Als Reaktion auf eine erkannte Manipulation kann ein Gerät, beispielsweise das den Datensatz übertragende oder empfangende Feldgerät, beispielsweise einen eigensicheren Zustand einnehmen, einen Neustart auslösen usw. Das betroffene Gerät kann insbesondere bei anderen Geräten als gesperrt gelistet werden.

Als Testdatensatz kann ein Ausschnitt aus einem über die Datenkommunikationsverbindung zu übertragenden Datensatz verwendet werden. Für das Zuerkennen der Integrität des Testdatensatzes können verschiedene Anforderungen gestellt werden: Eine Integrität kann beispielsweise nur dann zuerkannt werden, wenn eine Unversehrtheit des Testdatensatzes nachgewiesen werden kann, beispielsweise mit Hilfe von Prüfsummenverfahren. Ferner kann beispielsweise eine Integrität nur dann zuerkannt werden, wenn auch die Authentizität des geschützten Testdatensatzes erkannt wird. Dies wird insbesondere mit Hilfe von schlüsselbasierten Prüfsummen oder digitalen Signaturen erreicht.

Außerdem werden für das Feststellen der Integrität Plausibilitätsinformationen herangezogen, anhand derer der Inhalt des Testdatensatzes auf Plausibilität hin untersucht wird. Beispielsweise werden Wertebereiche von Werten des Testdatensatzes überprüft. Unerwartet von den Plausibilitätswerten abweichende Messwerte bewirken, dass die Integrität nicht zuerkannt wird. Ebenso können statistische Parameter zur Auswertung herangezogen werden. Diese spiegeln beispielsweise Muster von in einer Automatisierungsanlage übermittelten Steuerungsbefehlen wider, beispielsweise die Häufigkeit oder Reihenfolge von Start-/Stop-Befehlen. Die Plausibilitätsinformationen können ferner aus simulierten Daten abgeleitet werden, welche unter Verwendung von Simulationsmodellen und den Daten des Testdatensatzes ermittelt werden. Ebenso können redundante Daten untereinander abgeglichen werden.

Neben dem Prüfen des kryptographisch geschützten Testdatensatzes in Hinblick auf eine Authentizität oder Identität ist somit überdies ein Test auf Plausibilität vorgesehen. Erst dann wird die Integrität zuerkannt. Insbesondere ist im Umfeld von Steuerungskommunikation mit der Übertragung von sensitiven Informationen von Sensoren oder Aktuatoren die Überwachung der funktionalen Integrität eines Testdatensatzes relevant. Dies wird vorteilhaft durch die Kombination von kryptographischen Berechnungen und von einem Abgleich mit Plausibilitätsinformationen erreicht.

In Systemen mit hohen Schutzanforderungen kann das Verfahren auf vorteilhafte Weise als zusätzliche Schutzebene verwendet werden. Insbesondere kann je nach Anforderungen an Echtzeitfähigkeit zwischen dem vorgeschlagenen Verfahren und anderen, rechenaufwändigeren Verfahren, gewechselt werden. Es ist auf vorteilhafte Weise nicht erforderlich, ein Komplettsystem kryptographisch zu überwachen. Die operative, echte Kommunikation muss gemäß dem vorgeschlagenen Verfahren nicht kryptographisch geschützt werden. Dadurch ist der beschriebene Ansatz auch bei extrem Echtzeit-kritischen Systemen anwendbar. Überdies wird nicht nur die Datenübertragung geschützt, sondern auch die Datenverarbeitung, beispielsweise auf einem Steuergerät. Durch die Trennung der Security-Funktionalität von der Steuerungs-Funktionalität ist eine getrennte Weiterentwicklung beider Aspekte möglich. Zusätzliche Features können somit schnell eingeführt werden.

Gemäß einer Ausgestaltung handelt es sich bei einer Kommunikation über die Kommunikationsverbindung um eine Steuerungskommunikation und es werden als Datensatz Steuerungsdaten oder Sensorwerte oder Ein- oder Ausgabesignale von Sensoren oder Aktuatoren übertragen. Gerade bei einer Steuerungskommunikation ist ein Integritätsprüfverfahren gefordert, welches unabhängig von der Steuerungssoftware als solche durchgeführt wird. Da vor allem die Steuerungssoftware anfällig für Manipulationsangriffe ist, wird durch das vorgeschlagene Verfahren eine besonders sichere Integritätsprüfung vorgestellt.

Gemäß einer Ausgestaltung wird der Testdatensatz als ein begrenzter, insbesondere digitaler, Signalausschnitt an einer Ein- oder Ausgabeschnittstelle eines Steuergerätes erfasst. Dazu kann beispielsweise ein Steuergerät eine integrierte Komponente aufweisen, die direkt an der Ein- oder Ausgabeschnittstelle einen sogenannten Snapshot als Stichprobe erfasst und kryptographisch geschützt bereitstellt. Es kann beispielsweise ein analoger oder digitaler Sensorwert oder analoge oder digitale Aktuator-Steuergrößen oder eine Steuerungskommunikation einer Netzwerk-Kommunikationsschnittstelle übermittelt werden. Die Stichprobeninformation kann auf vorteilhafte Weise nicht durch einen Software des Steuergerätes manipuliert werden.

Auf vorteilhafte Weise ist ein besonders hoher Schutz gegeben, wenn die Snapshots in Hardware oder nahe bei einer Ein-/Ausgabe-Funktionalität erfasst werden, da dann der Schutz nicht durch Software manipuliert werden kann.

Gemäß einer Ausgestaltung erfolgt das stichprobenartige Bestimmen in Abhängigkeit von einem Zufallswert oder von vorgegebenen Zeitpunkten oder von Messgrößen. Somit kann insbesondere die Häufigkeit einer Überwachung einzelner Testdatensätze bei einer Datenkommunikation variiert werden. Bei einer zufälligen Auswahl der Stichproben ist vorteilhafterweise ein Vorhersagen einer Überwachungsaktion erschwert. Ein Angreifer, welcher zu übertragende Daten manipulieren möchte, muss jederzeit mit einer Erstellung eines kryptographisch geschützten Testdatensatzes rechnen.

Gemäß einer Ausgestaltung wird für die kryptographischen Berechnungen Schlüsselmaterial, insbesondere ein symmetrisches oder asymmetrisches Schlüsselpaar verwendet.

Dabei kann insbesondere durch die Wahl des kryptographischen Schlüssels, welcher für das gewählte kryptographische Verfahren zum Schutz des Testdatensatzes gewählt wird, ein Sicherheitsniveau variabel gewählt werden.

Gemäß einer Ausgestaltung bestreffen die Plausibilitätsinformationen einen weiteren Testdatensatz oder den zu übertragenden Datensatz oder Daten des verteilten Systems. Der Plausibilitätscheck kann verschieden harten oder umfangreichen Anforderungen genügen müssen. Es können mehrere Plausibilitätsprüfungen mit Hilfe verschiedener Plausibilitätsinformationen kombiniert werden.

Die Erfindung betrifft ferner eine Kryptoanordnung zur Überwachung einer Integrität eines verteilten Systems, umfassend:
- eine Bestimmungseinheit zum stichprobenartigen Bestimmen eines Testdatensatzes abhängig von einem über eine Kommunikationsverbindung zu übertragenden Datensatz;
- eine Kryptoeinheit zum kryptographisch geschützten Bereitstellen des Testdatensatzes, wobei eine Übertragung des Datensatzes über die Kommunikationsverbindung durch das Bestimmen und Bereitstellen unbeeinflusst ist;
- eine Prüfeinheit mit Schnittstelle zum Empfangen des kryptographisch geschützten Testdatensatzes zum Prüfen des Testdatensatzes in Hinblick auf Integrität anhand von kryptographischen Berechnungen und von Plausibilitätsinformationen.

Beispielsweise ist die Bestimmungseinheit eine integrierte Komponente eines Steuergerätes. Bei einem FPGA-basierten System on Chip mit programmierbarer Logik und einer zentralen Prozessoreinheit, beispielsweise CPU, Soft-CPU oder Hard-CPU, ist die Bestimmungseinheit in der FPGA-Logik realisiert. Ebenso kann in diesem Fall die Krypto-Einheit in der FPGA-Logik realisiert sein. Die Krypto-Einheit hat insbesondere Zugriff auf einen kryptographischen Schlüssel, beispielsweise über einen Schlüsselspeicher. Beispielsweise erfolgt die Testdatensatz- oder Snapshot-Erfassung bei einem Steuerrechner über eine Kommunikationsschnittstelle oder bei einem Feldgerät in einem FPGA mit Input-Output-Funktionalität oder in einem separaten Input-Output-Baustein , oder in einem System On Chip mit Ein-Ausgabeeinheit integriert in diese, oder in einer separaten integrierten Hauptprozessoreinheit oder CPU, z.B. zur internen Überwachung der Ein-Ausgabeeinheit, beispielsweise für rückwirkungsfreies Snooping. Ferner erfolgt die Testdatensatz-Erfassung beispielsweise als in einen analogen oder digitalen Sensor oder Aktuator integriert. Ein Sensor oder Aktuator kann einen digitalen Snapshot erfassen und kryptographisch geschützt bereitstellen oder Datenpakete an einer Kommunikationsschnittstelle aufzeichnen und kryptographisch gesichert als Stichprobe bereitstellen.

Die Prüfeinheit verfügt über einen Zugriff auf Schlüsselmaterial zum Überprüfen des kryptographisch geschützten Testdatensatzes. Beispielsweise ist ein symmetrisches Verschlüsselungsverfahren zwischen Krypto-Einheit und Prüfeinheit vorgesehen. Ebenso kann ein asymmetrisches Verfahren verwendet werden, bei welchem die Prüfeinheit eine digitale Signatur der Krypto-Einheit mit einem öffentlichen Schlüssel der Krypto-Einheit prüft.

Die Prüfeinheit wirkt als Integrity Observer und überprüft die Integrität mittels einer Trusted Function. Die Trusted Function wird insbesondere durch das kryptographische Überprüfungsverfahren dargestellt. Sowohl beispielsweise eine kryptographische Prüfsumme der Stichproben wird verifiziert, wie auch der Inhalt der Stichprobe. Die Plausibilitätsinformationen können dabei beispielsweise von einem Engineering-System bereitgestellte Informationen berücksichtigen oder einen Verlauf empfangener Sensorwerte. Die Stichprobe, das heißt der Testdatensatz, kann von einem involvierten Knoten innerhalb einer Steuerungsanlagen, wie beispielsweise einem Steuerrechner, Sensor oder Aktuator, in der Funktion der Auswahleinheit und der Krypto-Einheit selbst bereitgestellt werden oder sie kann alternativ von einer Zusatzkomponente, welche die Auswahleinheit oder die Krypto-Einheit darstellt, mitgehört und kryptographisch geschützt bereitgestellt werden.

Die vorgeschlagene Lösung hat den Vorteil, dass das Zusammenwirken mehrerer Komponenten in einem verteilten Steuerungssystem überwacht werden kann. Dabei kann sowohl die Integrität eines Steuerungssystems selbst wie auch die Datenübertragung von Steuerungsdaten überwacht werden.

Gemäß einer weiteren Ausgestaltung handelt es sich bei einer Kommunikation über die Kommunikationsverbindung um eine Steuerungskommunikation und der Datensatz weist Steuerungsdaten oder Sensorwerte oder Ein- oder Ausgabesignale von Sensoren oder Aktuatoren auf.

Gemäß einer Ausgestaltung ist die Auswahl einer Krypto-Einheit als eine integrierte Komponente eines Steuergeräts oder eines Sensors oder Aktuators ausgebildet.

Die Erfindung betrifft ferner ein Computerprogrammprodukt mit einem ersten Computerprogramm, das Mittel zur Durchführung des Verfahrens nach einem der vorstehenden Ausgestaltungen aufweist, wenn das erste Computerprogramm auf einer ersten programmgesteuerten Einrichtung zur Ausführung gebracht wird.

Gemäß einer Weiterbildung ist das erste Computerprogramm auf der ersten programmgesteuerten Einrichtung separat zu einem weiteren Computerprogramm ausführbar, das Mittel zur Durchführung einer Steuerung aufweist, wenn das weitere Computerprogramm auf einer weiteren programmgesteuerten Einrichtung zur Ausführung gebracht wird. Beispielsweise wird der Testdatensatzes durch eine auf einer programmierbaren Logik vorgesehenen separaten Prozessoreinheit oder durch einen separaten Rechenkern erfasst und kryptographisch geschützt. Somit ist die Software zum Erfassen und Schützen einer Stichprobe vorteilhafter Weise unabhängig von einer eigentlichen Steuerungssoftware. Auch bei einer manipulierten Steuerungssoftware ist die Stichprobenfunktionalität, die für eine Integritätsüberwachung erforderlich ist, nicht beeinflusst. In einer Variante wird die Stichprobe auf dem Steuergerät in Software erfasst, wird allerdings in einer separierten Ausführungsumgebung, beispielsweise durch einen Hypervisor, separiert oder in einer Trustzone separiert, ausgeführt, ausgeführt.

Die Erfindung wird nachfolgend mit Hilfe von Ausführungsbeispielen anhand der Figuren näher erläutert. Es zeigen:
- Figur 1: eine schematische Darstellung eines vernetzten Steuerungssystems mit einer Krypto-Anordnung gemäß einem ersten Ausführungsbeispiel der Erfindung;
- Figur 2: eine schematische Darstellung eines System on Chip mit programmierbarer Hardware und Mitteln zur Ausführung des Verfahrens gemäß einem zweiten Ausführungsbeispiel der Erfindung.

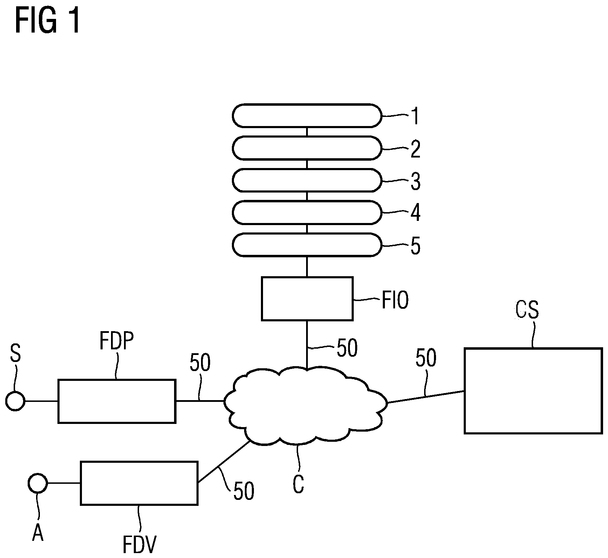

Figur 1 zeigt schematisch ein vernetztes Steuerungssystem mit einem Feldgerät zur Messung von Druck FDP, welches die erfassten Messdaten über ein Steuerungsnetzwerk C an einen Steuerrechner oder Control-Server S überträgt. Das Druckfeldgerät FDP ist dazu mit einem Drucksensor S verbunden. Der Steuerrechner S überträgt Steueranweisungen an das Steuergerät FDV. Dieses ist mit einem Ventil als Aktuator A verbunden.

Die Datenübertragung erfolgt zyklisch, beispielsweise jede Millisekunde. Bei dem Steuerungsnetzwerk C handelt es sich beispielsweise um ein IP-basiertes Netzwerk, welches eine Vielzahl von Feldgeräten, wie beispielsweise weitere Sensoren oder Schalter, miteinander verbindet. Ebenso über das Steuernetzwerk C angeschlossen ist ein Functional Integrity Observer FIO, welcher die Stichproben der zu übertragenden Daten, entweder die Sensordaten oder die ausgegebenen Steuerbefehle, auf Integrität hin überprüft.

Das Druckfeldgerät FDP sowie das Steuergerät FDV, der Control-Server CS, der Sensor S und der Aktuator A erstellen jeweils eine kryptographisch geschützte Stichprobe 50. Diese wird gemäß dem vorliegenden Beispiel über das Steuernetzwerk C zum Functional Integrity Observer FIO übertragen. Eine Stichprobe enthält eine Identifizierungsinformation des Erstellers der Stichprobe, die erfassten Stichprobendaten sowie eine kryptographische Prüfsumme. Für jede der Komponenten erfasst der Functional Integrity Observer FIO jeweils eine separate Stichprobe 1-5. Unter Verwendung der Stichproben wird nun jeweils eine Plausibilisierung durchgeführt. Vorzugsweise erfasst der Functional Integrity Observer zusätzlich die zu den Stichproben 1-5 zugehörigen kryptographisch nicht geschützten übertragenen Daten und überprüft, ob diese konsistent mit den kryptographisch geschützten Stichproben sind. Alternativ erfolgt die Plausibilisierung über den Inhalt der kryptographisch geschützten Testdaten aufgrund von abgespeicherten Referenzwerten.

Für den Fall, dass die Überprüfung ein Ergebnis ergibt, welches eine Integrität nicht bestätigen kann, wird eine Alarmmeldung ausgegeben. Beispielsweise nehmen einzelne oder alle Geräte oder nur das Gerät, welches einen Alarm ausgelöst hat, einen eigensicheren Betriebszustand ein oder stellen eine lokale Alarmmeldung, beispielsweise zur Meldung an ServicePersonal, bereit.

Die Stichproben 1-5 können verzögert zur Übertragung der zugehörigen Daten übertragen werden. Das heißt, sie müssen nicht oder nicht im selben Maß wie die eigentlichen Mess- oder Steuerdaten mit geringer Latenz übertragen und bearbeitet werden.

Neben einer Realisierung des Functional Integrity Observers FIO als Zusatzknoten ist ebenso eine integrierte Funktionalität des Control-Servers S denkbar. Er kann ebenso in einem übergeordneten Leitsystem, insbesondere einem SCADA-System, realisiert sein oder in einem Backend-System oder einem Cloud-Service.

Die Auswerte-Algorithmik des Functional Integrity Observers FIO zur Erkennung von Integritätsverletzungen kann unterschiedliche Prüfungen durchführen. Diese können einzeln oder kombiniert miteinander vorgesehen sein. Beispielsweise führt das Ausbleiben von Stichproben dazu, dass eine Integrität des Gesamtsystems nicht zuerkannt wird. Ferner können die Stichproben Messwerte enthalten, welche außerhalb von vorgesehenen Wertebereichen sind. Ferner können statistische Parameter ausgewertet werden, wie beispielsweise Häufigkeit von Übertragungsfehlern oder ähnlichem. Ebenso kann eine Plausibilisierung unter Verwendung eines Simulationsmodells des Automatisierungssystems durchgeführt werden. Dazu kann die Simulation mit den ungeschützt übertragenen Mess- oder Steuerdaten beaufschlagt werden. So kann ein Ähnlichkeitsvergleich der tatsächlichen Stichproben mit den im Simulationsmodell ermittelten Stichproben durchgeführt werden. Ferner sind Quer-Checks mehrerer redundanter Datensätze möglich sowie die Beaufschlagung der ungeschützten Steuerungsbefehle auf eine virtuelle Steuerungsfunktionalität. Auch diese simulierte Steuerung kann durch einen Ähnlichkeitsvergleich mit den empfangenen Stichproben auf Plausibilität hin überprüft werden.

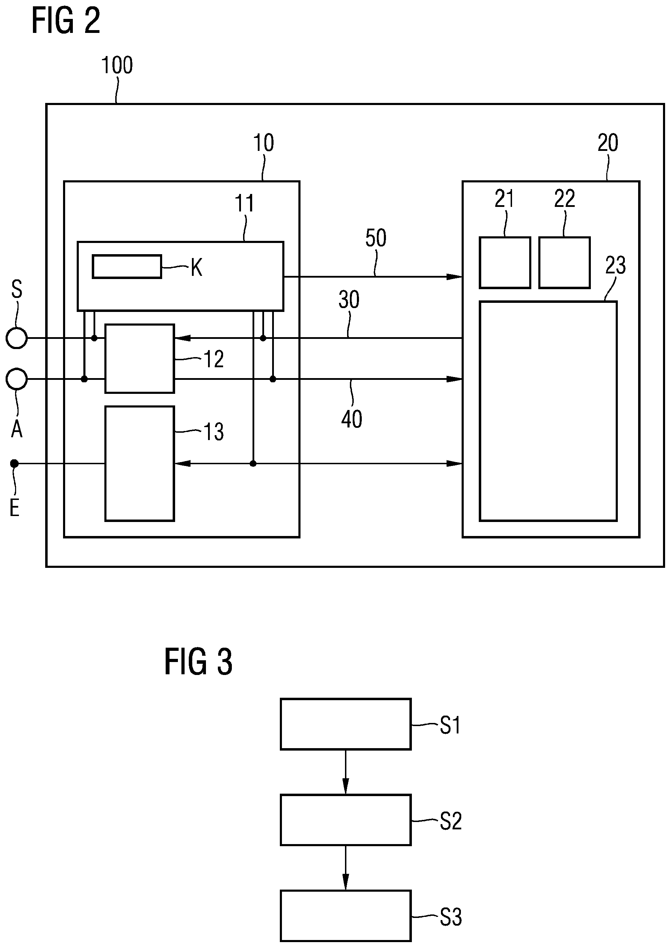

In Figur 2 ist ein System on Chip 100 mit programmierbarer Hardware 10, beispielsweise einem FGPA, und einem programmierbaren Prozessor, einer CPU 20, schematisch abgebildet. Applikationen 21, 22 können über ein Betriebssystem 23 auf eine Ein-/Ausgabeeinheit 12 zugreifen, welche durch die programmierbare Hardware 10 realisiert ist. Es sind insbesondere Sensoren S und Aktuatoren A angeschlossen. Durch Software der CPU 20 werden Steuerkommandos 30 ausgegeben beziehungsweise Messungen 40 erfasst und ausgewertet. Es ist überdies eine Netzwerkschnittstelle 13 vorgesehen, beispielsweise eine Ethernetschnittstelle, worüber die Software mit anderen Systemen Daten über ein Datenkommunikationsprotokoll austauschen kann, beispielsweise Diagnose- oder Konfigurationsdaten in einem SCADA-System oder übergeordneten Steuerrechner.

Es ist überdies eine Snapshot-Capture-Unit 11 vorgesehen und als Teil der programmierbaren Hardware 10 realisiert. Beispielsweise kann diese als VHDL-Modul oder Verilog-Modul realisiert sein. Sie kann als Digital-Logik oder über eine Soft-CPU oder als Kombination aus Digital-Logik und Soft-CPU realisiert sein. Über interne Schnittstellen, vorzugsweise mit Read-Only-Funktionalität, kann die Snapshot-Capture-Unit 11 auf Kommandos, Messungen und Teile der Datenkommunikation zugreifen. Durch den Nur-Lese-Zugriff kann ein rückwirkungsfreies Mithören der Signale beziehungsweise der Kommunikation erreicht werden. Es kann eine Treiberfunktion vorgesehen werden oder ein Pufferregister oder ein Latch oder ein Dual-Port-RAM, um den erfassten Wert eines Signals rückwirkungsfrei zu puffern. Bei einer Ein-/Ausgabe-Schnittstelle kann die Snapshot-Capture-Unit 11 Sensor- oder Aktuatorgrößen direkt an der Eingabe oder nach dem Schnittstellenblock abgreifen.

Die Snapshot-Capture-Unit 11 umfasst einen kryptographischen Schlüssel K, beispielsweise einen Signaturschlüssel als privaten asymmetrischen Schlüssel oder einen symmetrischen kryptographischen Schlüssel. Die Snapshot-Capture-Unit 11 erfasst stichprobenartig Signale und speichert diese intern. Liegt ein vollständiger Stichprobensatz vor, so kann ein kryptographisch geschützter Stichprobensatz bereitgestellt werden. Dazu wird der Schlüssel K verwendet, um beispielsweise eine digitale Signatur oder einen Nachrichtenprüfcode, sogenannten Message Authentication Code, über die erfassten Stichprobendaten zu bilden. Die kryptographisch geschützte Stichprobe 50 wird der CPU 20 bereit gestellt. Eine Software, die auf der CPU 20 ausgeführt wird, kann die Stichprobe über das Netzwerk-Interface 13 weiterleiten oder lokal prüfen. Auf vorteilhafte Weise sind die erfassten Stichproben vertrauenswürdig, da sie direkt in Hardware, nämlich auf der programmierbaren Hardware 10, erfasst und dort kryptographisch geschützt werden. Sie können daher nicht durch einen Softwarecode der CPU 20, welcher manipuliert sein könnte, unbemerkt modifiziert werden.

Figur 3 zeigt schematisch den Ablauf der Verfahrensschritte des stichprobenartigen Bestimmens S1, des kryptographisch geschützten Bereitstellens S2 sowie des Prüfens S3. In Verfahrensschritte werden in vorteilhafter Weise in der abgebildeten Reihenfolge durchlaufen.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Überwachen einer Integrität eines verteilten Systems, aufweisend die folgenden Schritte:
- stichprobenartiges Bestimmen (S1) eines Testdatensatzes abhängig von einem über eine Kommunikationsverbindung des verteilten Systems zu übertragenden Datensatz;
- kryptographisch geschütztes Bereitstellen (S2) des Testdatensatzes an eine Prüfeinheit, wobei eine Übertragung des Datensatzes über die Kommunikationsverbindung durch das Bestimmen und Bereitstellen unbeeinflusst erfolgt;
- Prüfen (S3) des kryptographisch geschützten Testdatensatzes durch die Prüfeinheit in Hinblick auf Integrität anhand von kryptographischen Berechnungen und von Plausibilitätsinformationen,
**dadurch gekennzeichnet, dass**
die Plausibilitätsinformationen einen Verlauf oder ein Muster des zu übertragenden Datensatz betreffen.

2. Verfahren nach Anspruch 1, wobei es sich bei einer Kommunikation über die Kommunikationsverbindung um eine Steuerungskommunikation handelt und als Datensatz Steuerungsdaten oder Sensorwerte oder Ein- oder Ausgabe-Signale von Sensoren oder Aktuatoren übertragen werden.

3. Verfahren nach Anspruch 1 oder 2, wobei durch das Prüfen ein Ergebnis lieferbar ist, welches eine Integrität des Testdatensatzes bestätigt oder eine Alarmmeldung bereitstellt.

4. Verfahren nach Anspruch 3, wobei das Ergebnis die Integrität mittels einer kryptographisch geschützten Bestätigungsinformation attestiert.

5. Verfahren nach einem der vorstehenden Ansprüche, wobei der Testdatensatz als ein begrenzter, Signalausschnitt an einer Ein- oder Ausgabeschnittstelle eines Steuergerätes erfasst wird.

6. Verfahren nach einem der vorstehenden Ansprüche, wobei das stichprobenartige Bestimmen in Abhängigkeit von einem Zufallswert oder von vorgegebenen Zeitpunkten oder von Messgrößen erfolgt.

7. Verfahren nach einem der vorstehenden Ansprüche, wobei für die kryptographischen Berechnungen Schlüsselmaterial, ein symmetrisches oder asymmetrisches Schlüsselpaar, verwendet wird.

8. Kryptoanordnung zur Überwachung einer Integrität eines verteilten Systems, umfassend:
- eine Bestimmungseinheit zum stichprobenartigen Bestimmen eines Testdatensatzes abhängig von einem über eine Kommunikationsverbindung zu übertragenden Datensatz;
- eine Kryptoeinheit (11) zum kryptographisch geschützten Bereitstellen des Testdatensatzes, wobei eine Übertragung des Datensatzes über die Kommunikationsverbindung durch das Bestimmen und Bereitstellen unbeeinflusst ist;
- eine Prüfeinheit (20) mit Schnittstelle zum Empfangen des kryptographisch geschützten Testdatensatzes zum Prüfen des Testdatensatzes in Hinblick auf Integrität anhand von kryptographischen Berechnungen und von Plausibilitätsinformationen,
**dadurch gekennzeichnet, dass**
die Plausibilitätsinformationen einen Verlauf oder ein Muster des zu übertragenden Datensatz betreffen.

9. Kryptoanordnung nach Anspruch 8, wobei es sich bei einer Kommunikation über die Kommunikationsverbindung um eine Steuerungskommunikation handelt und der Datensatz Steuerungsdaten oder Sensorwerte oder Ein- oder Ausgabe-Signale von Sensoren oder Aktuatoren aufweist.

10. Kryptoanordnung nach Anspruch 8 oder 9, wobei die Bestimmungseinheit und die Kryptoeinheit als eine integrierte Komponente eines Steuergerätes oder eines Sensors oder Aktuators ausgebildet sind.

11. Computerprogrammprodukt mit einem ersten Computerprogramm, das Mittel zur Durchführung des Verfahrens nach einem der Ansprüche 1 bis 7 aufweist, wenn das erste Computerprogramm auf einer ersten programmgesteuerten Einrichtung zur Ausführung gebracht wird.

## Claims

1. Method for monitoring an integrity of a distributed system, having the following steps:
- definition (S1), on a random sample basis, of a test dataset depending on a dataset that is to be transmitted via a communication connection of the distributed system;
- cryptographically protected provision (S2) of the test dataset to a checking unit, wherein the dataset is transmitted via the communication connection in such a way that it is unaffected by the definition and provision;
- checking (S3) of the integrity of the cryptographically protected test dataset by the checking unit using cryptographic calculations and plausibility information,
**characterized in that**
the plausibility information relates to a profile or a pattern of the dataset that is to be transmitted.

2. Method according to Claim 1, wherein a communication via the communication connection is a control communication and control data or sensor values or input or output signals from sensors or actuators are transmitted as the dataset.

3. Method according to Claim 1 or 2, wherein a result which confirms an integrity of the test dataset or provides an alarm signal is deliverable by the check.

4. Method according to Claim 3, wherein the result certifies the integrity by means of cryptographically protected confirmation information.

5. Method according to one of the preceding claims, wherein the test dataset is acquired as a limited signal extract on an input or output interface of a control device.

6. Method according to one of the preceding claims, wherein the definition on a random sample basis is carried out depending on a random value or on specified times or on measured quantities.

7. Method according to one of the preceding claims, wherein key material, a symmetric or asymmetric key pair, is used for the cryptographic calculations.

8. Crypto-arrangement for monitoring an integrity of a distributed system, comprising:
- a definition unit for the definition, on a random sample basis, of a test dataset depending on a dataset that is to be transmitted via a communication connection;
- a crypto-unit (11) for the cryptographically protected provision of the test dataset, wherein a transmission of the dataset via the communication connection is unaffected by the definition and provision;
- a checking unit (20) with an interface for receiving the cryptographically protected test dataset to check the integrity of the test dataset using cryptographic calculations and plausibility information,
**characterized in that**
the plausibility information relates to a profile or a pattern of the dataset that is to be transmitted.

9. Crypto-arrangement according to Claim 8, wherein a communication via the communication connection is a control communication and the dataset has control data or sensor values or input or output signals from sensors or actuators.

10. Crypto-arrangement according to Claim 8 or 9, wherein the definition unit and the crypto-unit are designed as an integrated component of a control device or of a sensor or actuator.

11. Computer program product with a first computer program which has means for carrying out the method according to one of Claims 1 to 7 if the first computer program is executed on a first program-controlled device.

## Revendications

1. Procédé de surveillance d'une intégrité d'un système distribué, comportant les étapes suivantes :
- détermination aléatoire (S1) d'un jeu de données d'essai en fonction d'un jeu de données à transmettre sur une liaison de communication du système distribué ;
- fourniture (S2), protégée cryptographiquement, du jeu de données d'essai à une unité de contrôle, une transmission du jeu de données sur la liaison de communication ayant lieu de manière non influencée par la détermination et la fourniture ;
- contrôle (S3) du jeu de données d'essai protégé cryptographiquement par l'unité de contrôle quant à l'intégrité à l'aide de calculs cryptographiques et d'informations de plausibilité,
**caractérisé en ce que**
les informations de plausibilité concernent une évolution ou un modèle du jeu de données à transmettre.

2. Procédé selon la revendication 1, une communication sur la liaison de communication étant une communication de commande et en tant que jeu de données étant transmises des données de commande ou des valeurs de capteurs ou des signaux d'entrée ou de sortie de capteurs ou d'actionneurs.

3. Procédé selon la revendication 1 ou 2, le contrôle permettant de fournir un résultat qui confirme une intégrité du jeu de données d'essai ou qui fournit un message d'alarme.

4. Procédé selon la revendication 3, le résultat attestant l'intégrité au moyen d'une information de confirmation protégée cryptographiquement.

5. Procédé selon l'une des revendications précédentes, le jeu de données d'essai étant détecté en tant que partie de signal limitée au niveau d'une interface d'entrée ou de sortie d'un appareil de commande.

6. Procédé selon l'une des revendications précédentes, la détermination aléatoire ayant lieu en fonction d'une valeur aléatoire ou d'instants donnés ou de grandeurs de mesure.

7. Procédé selon l'une des revendications précédentes, pour les calculs cryptographiques étant utilisé du matériel de clé, une paire de clés symétriques ou asymétriques.

8. Ensemble cryptographique pour surveiller une intégrité d'un système distribué, comprenant :
- une unité de détermination pour la détermination aléatoire d'un jeu de données d'essai en fonction d'un jeu de données à transmettre sur une liaison de communication ;
- une unité cryptographique (11) pour la fourniture, protégée cryptographiquement, du jeu de données d'essai, une transmission du jeu de données sur la liaison de communication étant non influencée par la détermination et la fourniture ;
- une unité de contrôle (20) avec une interface pour recevoir le jeu de données d'essai protégé cryptographiquement pour le contrôle du jeu de données d'essai quant à l'intégrité à l'aide de calculs cryptographiques et d'informations de plausibilité,
**caractérisé en ce que**
les informations de plausibilité concernent une évolution ou un modèle du jeu de données à transmettre.

9. Ensemble cryptographique selon la revendication 8, une communication sur la liaison de communication étant une communication de commande et le jeu de données comportant des données de commande ou des valeurs de capteurs ou des signaux d'entrée ou de sortie de capteurs ou d'actionneurs.

10. Ensemble cryptographique selon la revendication 8 ou 9, l'unité de détermination et l'unité cryptographique étant réalisées en tant que composant intégré d'un appareil de commande ou d'un capteur ou actionneur.

11. Produit de programme informatique avec un premier programme informatique qui comporte des moyens pour exécuter le procédé selon l'une des revendications 1 à 7 lorsque le premier programme informatique est exécuté sur un premier dispositif commandé par programme.
